# EUROPEAN PATENT SPECIFICATION

(11) **EP 1 330 892 B1**
(45) Date of publication and mention of the grant of the patent: **13.10.2004**
(21) Application number: 01982502.5
(22) Date of filing: 02.11.2001
(51) Int. Cl.: H04L 12/18, H04Q 7/38

(54) **METHOD AND SYSTEM FOR TRANSMITTING INFORMATION**
VERFAHREN UND SYSTEM ZUR INFORMATIONSÜBERTRAGUNG
PROCEDE ET SYSTEME D'EMISSION D'INFORMATION

(30) Priority: 02.11.2000 FI 20002417; 10.01.2001 FI 20010047
(43) Date of publication of application: 30.07.2003
(73) Proprietor: TeliaSonera Finland Oyj, 00510 Helsinki (FI)
(72) Inventor: JOKELA, Harri, FIN-00350 HELSINKI (FI); JULKUNEN, Mika, FIN-00750 Helsinki (FI); KESKI-HEIKKILÄ, Mika, FIN-00810 HELSINKI (FI)
(74) Representative: Simmelvuo, Markku
(86) International application number: PCT/FI2001/000959
(87) International publication number: WO 2002/037761

(56) References cited:
- EP-A2- 0 813 330
- WO-A1-00/57601
- GB-A- 2 336 970

## Description

The present invention relates to telecommunication systems. In particular, the invention relates to a method and system for establishing a virtual connection between two parties.

### BACKGROUND OF THE INVENTION

In telecommunication networks it is possible to transmit information between two or more terminal devices. Most favourable is the situation, when both parties of the transfer of information - the sender and the receiver - are aware of the information to be transferred. In certain cases, it is possible to push information to the terminal device from the telecommunication network, which information the user of the terminal device is, however, not willing to receive. In addition, the user of the terminal device may have to pay for receiving the pushed information.

In a circuit-switched (CS, Circuit Switched) mobile phone environment it is possible to make a mobile terminated (MT, Mobile Terminated) data call. This causes, however, permanent costs to the operator. Correspondingly, the monthly payment of the MT data call as well as the minute payment falls on the terminal device.

In a packet-switched (PS, Packet Switched) mobile phone environment an MT data connection is necessarily not possible. Instead, it is possible to establish mobile originated (MO, Mobile Originated) connections, in which case the user activates a PDP context (PDP, Packet Data Protocol) in the direction of the public land mobile network. After this, the transfer of information is successful from the terminal device to the public land mobile network and vice versa. In an MO case, a connection to another terminal device is, however, not possible. The public land mobile network cannot necessarily activate the connection to the terminal device either, although there would be an application or a user willing to transfer information directly to another terminal device.

With the Network Request PDP Context Activation functionalities of the GPRS network (GPRS, General Packet Radio Service) it is possible to make a data connection activated by the public land mobile network. The data connection is made e.g. between the public land mobile network and the terminal device, or between two terminal devices.

WO-A1-0057601 discloses a method and network element for forwarding a multicast message received from an external packet data network to subscribers of a packet radio network, wherein a subscriber-specific information defining multicast messages to be received by the subscribers is stored in a network element (GGSN) of the packet radio network. Based on this subscriber-specific information, a point-to-point connection is established between the multicast content provider of the multicast message and a subscriber having joined the corresponding multicast group. The subscriber may request a list of available multicast groups from the network element and may inform the network element of the multicast messages he wants to listen to by using a point-to-point context activation. Thus, the network element, which may be a gateway GPRS support node plays an arbitrator role for multicast messages. Thereby, only minor changes of standard network elements are required.

GB-A-2336970 discloses a method and system are provided for automatic call connection. A call back request is initiated by a first user and then sent to a second user. After the call back request is received by the second user, the second user is given the option of accepting or rejecting the call back request. If the second user accepts the call back request, then the first user is automatically connected to the second user.

EP-A2-0813330 discloses a method that directs a connection request from a calling terminal to a called terminal associated with a user group. On request from another terminal a connection is set up between the calling terminal and the requested terminal. Before setting up the connection between the calling and called terminals, data which determines the calling terminal are sent to at least one of the other terminals of the user group. Preferably, the data which determines the calling terminal is sent to all terminals of the user group which are not occupied.

The problem at present is that it is possible to push information to a mobile client from the network without the client's consent. Furthermore, a problem is becoming the risk of information security and virus. In addition, this will increase the costs of the mobile client, when somebody on purpose keeps pushing information to the mobile station from the network without the client's consent.

### OBJECTIVE OF THE INVENTION

The objective of the invention is to eliminate the drawbacks referred to above, or at least significantly to alleviate them. One specific objective of the invention is to disclose a new type of method and system in which it is possible to virtually establish connections between terminal devices, in which connections the triggering of the connection set-up is done by the network.

### BRIEF DESCRIPTION OF THE INVENTION

The present invention relates to a method for establishing a data connection between a terminal device of a public land mobile network and another terminal device of the public land mobile network or a terminal device or some other component of some other telecommunication network.

In the method in accordance with the invention, a community is registered in a data mirror that consists of a plurality of members each using a terminal device, each of the terminal devices being in connection to the public land mobile network or to the telecommunication network. The data mirror is connected to the public land mobile network and/or to the telecommunication network. The members of the community have to register the identification of the users belonging to the group, which is e.g. an identifier and a password corresponding to it, an IP address (IP, Internet Protocol), a MSISDN number (MSISDN, Mobile Subscriber ISDN) or a port number. By means of this information the members of the community are able to establish a connection to the other members of the same community. Each member has got a profile of their own to which it is possible to save information e.g. on the allowed connection types, allowed protocols, allowed applications, content preferences, quality requirements of the connection, etc.

A terminal device of a sending member of the community establishes a connection to the data mirror. In order that the connection set-up would be successful the sending member has to identify himself/herself as shown above. The sending member provides the data mirror with the piece of information on those members of the community to whom a connection is desired to be established. The data mirror sends to one or more terminal devices of receiving members of the community a connection request which includes information e.g. on the object requesting the connection, the subject of the connection or the type of the connection. The data mirror sends a connection request to the terminal devices of the receiving member e.g. via the short message service (SMS, Short Message Service) of the public land mobile network.

The receiving member of the connection set-up message do not have to accept the connection request. If the receiving member, however, wishes to establish a connection to the terminal device of the sending member, (s)he establishes first a connection to the data mirror. The receiving member shall identify himself/herself in conjunction with the connection set-up. At the same time it is checked that the receiving member belongs to the same community as the sending member. When the desired members of a certain community have established a connection to the data mirror, it is possible to transmit information between the terminal devices of the members of the community. One member may be a participant in one or more communities. Between the terminal devices of members of the community it is possible to transmit point-to-point information (PTP) or point-to-multipoint information (PTM).

It is also possible to arrange specific additional features in the data mirror. The data mirror may virus-check the data being transmitted to it, filter or compress information, depending on what settings the members of the community have set. The method in accordance of the invention does not take a stand on how a sending member or a receiving member establishes the connection to the data mirror. As the connection mode it is possible to use a circuit-switched as well as a packet-switched connection.

The invention relates to a system for establishing a data connection between a terminal device of a public land mobile network and another terminal device of the public land mobile network or a terminal device or some other component of some other telecommunication network. The system comprises a public land mobile network, a telecommunication network, a terminal device of a sending member in connection to the public land mobile network or to the telecommunication network, and one or more terminal devices of receiving members in connection to the public land mobile network or to the telecommunication network. The public land mobile network is e.g. a GSM network (GSM, Global System for Mobile communications), a GPRS network (GPRS, General Packet Radio Service) or a UMTS network (UMTS, Universal Mobile Telecommunications System). The telecommunication network is advantageously the Internet.

The system in accordance with the invention comprises a data mirror for registering a community, which community consists of a plurality of members using a terminal device, wherein the data mirror is connected to the public land mobile network and/or to the telecommunication network. The data mirror comprises a database, or there is a connection from the data mirror to the database, to which information relating to the communities and to the members of the communities has been saved. In addition, the terminal devices of the sending member and the receiving member comprise connection means for establishing a connection to the data mirror. The data mirror further comprises message means for sending a connection request to one or more terminal devices of receiving members of the community and information means for transmitting information between two or more terminal devices of members of the aforementioned community.

In one embodiment of the invention, the data mirror comprises virus-checking means for checking the information going through the data mirror.

In one embodiment of the invention, the data mirror comprises a filter for filtering the information going through the data mirror.

In one embodiment of the invention, the data mirror comprises a compressor for compressing the information going through the data mirror.

Thanks to the present invention, it is possible to filter certain elements from the information going through the data mirror, e.g. big attachment files. The data mirror also virus-checks all the information transmitted by it.

Thanks to the present invention, it is not possible to push information to the mobile station without the mobile client's consent. Furthermore, the solution enables one to reliably make sure of the identification of a member of another community.

### BRIEF DESCRIPTION OF THE DRAWINGS

In the following section, the invention will be described in more detailed by the aid of the examples of its embodiments, in which
Fig. 1 represents one system in accordance with the invention,
Fig. 2 is one advantageous flow chart illustrating the function of the method in accordance with the invention,
Fig. 3 represents one advantageous embodiment of the present invention, and
Fig. 4 represents one advantageous short message shown in the example of Fig. 3.

### DETAILED DESCRIPTION OF THE INVENTION

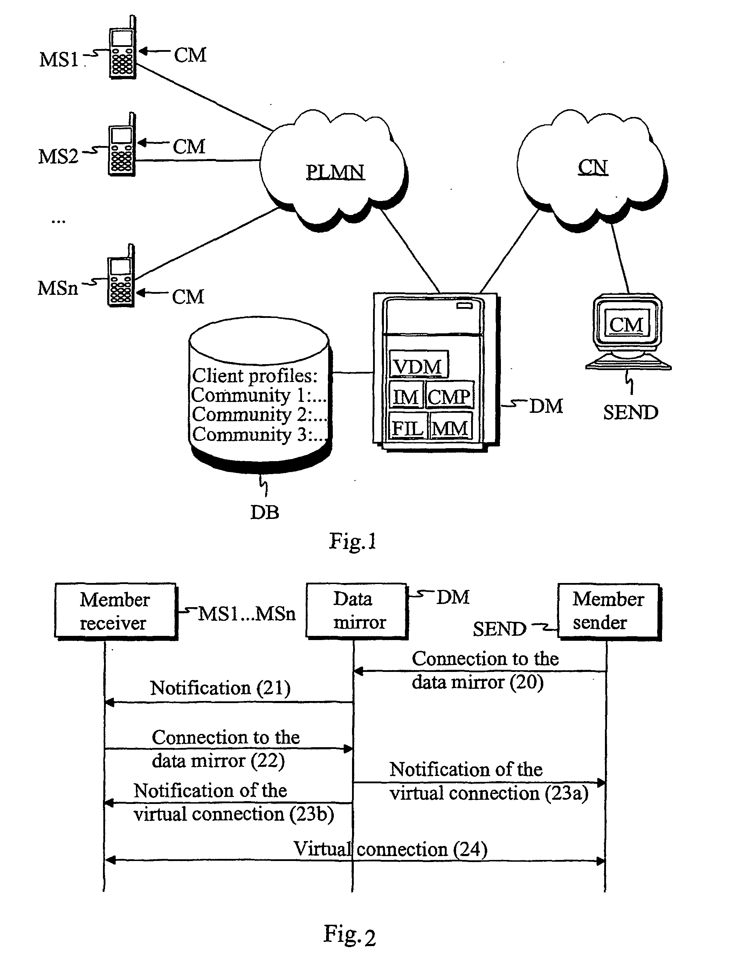

The system as shown in Fig. 1 comprises a public land mobile network PLMN, to which there are connected one or more mobile stations MS1...MSn. The system also comprises a telecommunication network CN. The data mirror DM is connected both to the public land mobile network PLMN and to the telecommunication network CN. The public land mobile network is e.g. a GSM network, a GPRS network or a UMTS network. The telecommunication network is preferably an Internet network. Connected to the telecommunication network CN is also a terminal device of a sending member SEND, which is preferably a computer. The data mirror DM is preferably used to refer to a server computer, which comprises the necessary software and interfaces for attaching it to the necessary telecommunication networks and other devices.

An essential element from the point of view of the invention is the data mirror DM. The data mirror DM comprises a database DB, or there is a connection from it to the database DB, to which client profiles have been saved. In order that the clients could use the services provided by the data mirror DB, they have to order the service from a service provider. The service provider is herein used to refer to an entity, which by means of the data mirror provides the terminal devices and applications with the possibility of establishing virtual connections. The service has to be initialized before its introduction.

The subscriber creates a user profile in which (s)he establishes different communities and defines parameters associated with the service. The subscriber may in his/her profile define different additional services, which may include e.g. the virus-checking of all data coming to the subscriber or the filtering or compressing of incoming data, depending on the bandwidth used. In the profile it is also possible to define information on allowed data connection types, quality requirements, content preferences, allowed protocols, allowed applications, etc. The subscriber may in addition edit his/her profile in a desired manner, e.g. via an Internet connection. The subscriber is hereinafter also referred to as a "member". The community is herein used to mean a kind of a user group to whose members it is possible to establish a connection inside the group via the data mirror DM. As a member belonging to the community it is possible to define any person or application clearly identifiable, for whose identification it is possible to use different identification methods. Methods of this kind include e.g. an identifier and a password, a MSISDN number, an IP address, a TCP port number (TCP, Transmission Control Protocol), etc. Between the members of the community it is possible to transmit point-to-point information (PTP) or point-to-multipoint information (PTM).

The data mirror DM is arranged to transmit information between the community members. Since the traffic between the members goes through the data mirror DM, it is possible to include different special functions in the operation of the data mirror. The virus checking means VDM are used to check the information going through the data mirror DM. The virus checking means VDM are preferably used to refer to an application implemented by program blocks of a computer that checks the information being checked for viruses described in the virus database. The information means IM are used to transmit the information coming to the data mirror DM to the appropriate terminal device of the member of the community.

The data mirror further comprises a compressor CMP, which is used to compress the information going through the data mirror. The compressor CMP is advantageously used to refer to an algorithm which enables one to compress the information being transmitted, e.g. in a situation where the bandwidth at the disposal of the receiver of the information is restricted. The compressor CMP may be implemented via software or by means of logic circuits. The data mirror DM also comprises a filter FIL for filtering the information to be transmitted via the data mirror. The filter FIL may be used to filter certain elements of the information, e.g. big attachment files, or it is possible to otherwise restrict the information to be transmitted to a receiving member. Message means MM are used to send the connection request to one or more terminal devices of receiving members of the community. The message means MM are used to refer e.g. to program blocks or components by means of which it is possible to create and send a short message of a public land mobile network.

The terminal devices of the sending member SEND and the receiving member MS1...MSn comprise connection means CM for establishing a connection to the data mirror DM. The connection means CM are herein used to mean e.g. a modem, a LAN interface, the connection protocols needed for data transfer, or other factors enabling the data transfer.

Although it has been described above that the system comprises both a public land mobile network and a packet-switched telecommunication network, the present invention may be utilized also in other telecommunication network combinations. A member of the community may establish a connection to the data mirror by using the desired telecommunication network and connection mode. The telecommunication network is used to refer e.g. to a public land mobile network, a regular telephone network or the Internet. Depending on the telecommunication network, it is possible to use a circuit-switched connection (e.g. GSM CSD, GSM HSCSD, ISDN, PSTN, etc.), or a packet-switched connection (e.g. GPRS, UMTS, LAN, etc.) as the connection mode. Further, although it has been presented above that one of the terminal devices of the members is connected to a public land mobile network PLMN and the other one to a telecommunication network CN, both the terminal devices of the sending member SEND and the receiving member MS may both communicate only with the public land mobile network PLMN. In other words, the public land mobile network PLMN and the telecommunication network CN refer to the one and the same network. Although it has been presented above that the terminal device of the sending member SEND is a computer, it may be any device connected to a public land mobile network PLMN or a telecommunication network CN, or a program or program block included in a device connected to a public land mobile network PLMN or a telecommunication network CN.

Fig. 2 represents one advantageous embodiment of the function of the method in accordance with the invention. The example of Fig. 2 comprises a terminal device of a receiving member MS, a data mirror DM, and a terminal device of a sending member SEND. The terminal device at the disposal of the receiving member MS is preferably a mobile station. The terminal device of the sending member SEND is in turn preferably a computer. Both members have ordered the service produced by the data mirror from the service provider and initialized the service. At the same time, the members have signed up as the members of the same community.

As shown by arrow 20, the sending member SEND establishes a connection to the data mirror DM. The sending member is reliably identified. As the piece of identification information, e.g. an identifier or a password, a MSISDN number, an IP address, a TCP port or some suitable combination may serve. The data mirror DM sends a connection request to the terminal device of the receiving member MS defined by the sending member SEND, arrow 21. Although it has been presented herein that the connection is a point-to-point connection, it may be a point-to-multipoint connection as well. The data mirror DM sends a connection request e.g. in a short message of the public land mobile network. The connection request comprises information e.g. on the object requesting the connection, the subject of the connection and the type of the connection.

If the receiving member MS accepts the connection request, s(he) establishes a connection to the data mirror DM, arrow 22. The connection is established using the selected telecommunication network and connection mode. The telecommunication network is e.g. a public land mobile network, a regular telephone network, or the Internet. Depending on the telecommunication network, it is possible to use a circuit switched connection (e.g. GSM CSD, GSM HSCSD, ISDN, PSTN, etc.) or a packet-switched connection (e.g. GPRS, UMTS, LAN, etc.) as the connection mode. The receiving member MS is identified in the same manner as the sending member SEND.

When the identification of all the active members of the community has been completed, the terminal devices of the members are sent a notification informing of the virtual connection, arrows 23a and 23b. In this way, there is a virtual point-to-point or a point-to-multipoint connection established between the members, in which the information sent to the data mirror DM is transmitted to all the active members of the same community, arrow 24.

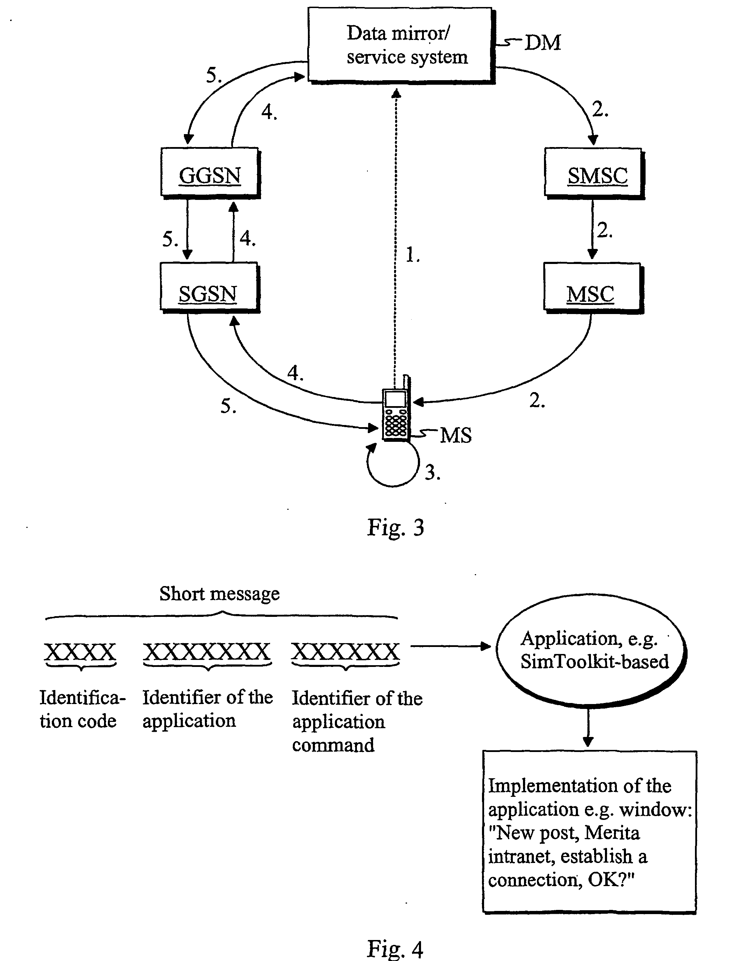

Fig. 3 represents one advantageous example of an embodiment in which the method in accordance with the invention may be utilized.

As shown by arrow 1, the user concludes a contact with the service provider, and the necessary parameters are defined in the terminal device, relating e.g. to the PDP context. In this example it is assumed that the mobile station MS may be equipped with a specific application, e.g. a Sim Application Toolkit application which analyses the command strings included in the short messages. The definitions of the Sim Application Toolkit can be found e.g. in the specification TS 101 267 V7.3.1 (1999-07) of ETSI (ETSI, European Telecommunications Standards Institute). When the system DM providing the service detects that, based on the contract defined with the user, there is a need to establish a connection to the mobile station MS, it sends a short message including commands to the mobile station MS, arrow 2. In other words, as the sending member serves the system DM providing the service. At the same time the mobile station MS and the service provider may authenticate each other and if necessary use encryption methods to protect the information being transmitted.

The mobile station MS receives a short message as shown by arrow 2. The content of the short message has been shown, by way of example, in Fig. 4. In this example, there is, at the beginning of the short message, an identifier that points to a certain service. A second attribute defines the fact of whose service provider's (herein the Merita intranet) service is concerned. A third attribute points to the command associated with the service. One such attribute is e.g. a message informing about new mail. As shown by arrow 3, an application installed on the mobile phone, such as e.g. a Sim Application Toolkit, analyses the received short message and establishes a PDP context to the service in question and displays a message on the mobile phone: "New mail, Merita intranet, establish a connection, OK?". If the user accepts this, a connection to the system DM of the service provider is established, arrow 4. When the connection to the system DM of the service provider has been established, the piece of information relating to the service may be transmitted to the mobile station MS, arrow 5. The connection is finally released by the user, mobile station or the service provider.

The user need not be connected to the service to retrieve the piece of information, instead the service provider may send a notification informing of new pieces of information to the user.

The invention is not restricted merely to the examples referred to above, instead many variations are possible within the scope of the inventive idea defined by the claims.

## Claims

1. A method for establishing a data connection between a terminal device of a public land mobile network and another terminal device of the public land mobile network or a terminal device or some other component of some other telecommunication network,
**characterized in that** the method further comprises the steps of:
a) registering in a data mirror connected to the public land mobile network and/or to the telecommunication network a community which consists of a plurality of members each using a terminal device, each of the terminal devices being in connection to the public land mobile network or to the telecommunication network;
b) establishing a connection from a terminal device of a sender member to the data mirror;
c) sending a connection request to one or more terminal devices of receiving members of the community; and if the a receiving member wishes to establish a connection, then
d) establishing a telecommunication connection from the one or more terminal devices of the receiving members to the data mirror; and
e) transmitting information between the terminal device of the sending member and the one or more terminal devices of the receiving members of the community via the data mirror.

2. The method according to claim 1, **characterized in that** in conjunction with step a), to each member of the community, at least one of the following pieces of identification information is attached:
a) identifier or password
b) IP address,
c) MSISDN number,
d) port number.

3. The method according to claim 1 or 2, **characterized in that** in conjunction with step b) :
requiring of the sender member a predefined piece of identification information for establishing a connection to the data mirror.

4. The method according to claim 1, **characterized in that** in conjunction with step b):
defining one or more receiving members to which one wishes to send information.

5. The method according to claim 1, **characterized in that** at step c):
sending one or more terminal devices of receiving members of the community a connection request from the data mirror, the connection request containing connection-specific information.

6. The method according to claim 5, characterized inthat the connection-specific information contains at least one of the following:
a) the member requesting the connection,
b) subject of the connection,
c) connection type.

7. The method according to claim 1 or 5, **characterized in that** the connection request is transmitted in a short message of the public land mobile network.

8. The method according to claim 1, **characterized in that** in conjunction with step d):
requiring of a receiving member a predefined piece of identification information for establishing a connection to the data mirror.

9. The method according to claim 1, **characterized in that** the connection type of step b) or step d) is packet-switched or circuit-switched.

10. The method according to claim 1, **characterized in that** a member may belong to one or more communities.

11. The method according to claim 1, **characterized in that** the information passed through the data mirror is virus-checked.

12. The method according to claim 1, **characterized in that** the information to be transmitted via the data mirror is filtered prior to transmitting the information to a terminal device of a member of the community.

13. The method according to claim 1, **characterized in that** the information going through the data mirror is compressed prior to sending the aforementioned information to a terminal device of a member of the community.

14. The method according to claim 1, **characterized in that** a member-specific profile is generated to the member, the profile containing information on at least one of the following:
a) allowed connection types,
b) allowed protocols,
c) allowed applications,
d) content preferences,
e) quality requirements of the connection.

15. A system for establishing a data connection between a terminal device of a public land mobile network and another terminal device of the public land mobile network or a terminal device or some other component of some other telecommunication network , the system comprising:
a public land mobile network (PLMN);
a telecommunication network (CN);
a terminal device (SEND) of a sending member in connection to the public land mobile network (PLMN) or to the telecommunication network (CN);
one or more terminal devices (MS1, MS2, ...MSn) of receiving members in connection to the public land mobile network (PLMN) or to the telecommunication network (CN);
**characterized in that**:
the system comprises a data mirror (DM) for registering a community which consists of a plurality of members using a terminal device, wherein the data mirror (DM) is connected (DM) to the public land mobile network (PLMN) and/or to the telecommunication network(CN);
the terminal device (SEND) of a sending member and the terminal devices (MS1, MS2, ...MSn) of receiving members comprise connection means (CM) for establishing a connection to the data mirror (DM);
the data mirror (DM) comprises connection means (MM) for sending a connection request to one or more terminal devices of the receiving members of the community; and
the data mirror (DM) comprises information means (IM) for transmitting information between the terminal device (SEND) of the sending member and the one or more terminal devices of the receiving members of the community.

16. The system according to claim 15, **characterized in that** the data mirror (DM) comprises virus checking means (VDM) for checking the information going through the data mirror (DM).

17. The system according to claim 15 or 16, **characterized in that** the data mirror (DM) comprises a filter (FIL) for filtering the information going through the data mirror (DM).

18. The system according to any one of the preceding claims 15, 16 or 17, **characterized in that** the data mirror (DM) comprises a compressor (CMP) for compressing the information going through the data mirror (DM).

19. The system according to any one of the preceding claims 15, 16, 17 or 18, **characterized in that** the data mirror (DM) comprises a database (DB), or there is a connection from the data mirror (DM) to the database (DB), to which information relating to the members of the community is saved.

20. The system according to any one of the preceding claims 15, 16, 17, 18 or 19, **characterized in that** the public land mobile network (PLMN) is a GSM network.

21. The system according to any one of the preceding claims 17, 18 or 19, **characterized in that** the public land mobile network (PLMN) is a GPRS network.

22. The system according to any one of the preceding claims 15, 16, 17, 18 or 19, **characterized in that** the public land mobile network (PLMN) is a UMTS network.

23. The system according to any one of the preceding claims 15, 16, 17, 18, 19, 20, 21 or 22, **characterized in that** the telecommunication network (CN) is the Internet.

## Patentansprüche

1. Verfahren zum Aufbauen einer Datenverbindung zwischen einem Endgerät eines öffentlichen Mobilfunknetzwerks und einem anderen Endgerät des öffentlichen Mobilfunknetzwerks oder einem Endgerät oder einer anderen Komponente eines anderen Telekommunikationsnetzwerks,
**dadurch gekennzeichnet, dass** das Verfahren die Schritte aufweist:
a) in einem mit dem öffentlichen Mobilfunknetzwerk und/oder dem Telekommunikationsnetzwerk verbundenen Datenspiegel wird eine Gemeinschaft registriert, die aus einer Mehrzahl von Mitgliedern besteht, die jeweils ein Endgerät benutzen, von denen jedes in Verbindung zu dem öffentlichen Mobilfunknetzwerk oder dem Telekommunikationsnetz steht;
b) es wird eine Verbindung von dem Endgerät eines sendenden Mitglieds zu dem Datenspiegel aufgebaut;
c) es wird eine Verbindungsanforderung zu einem oder mehreren Endgeräten empfangender Mitglieder der Gemeinschaft gesendet, und wenn ein empfangendes Mitglied eine Verbindung aufbauen möchte, dann
d) wird eine Telekommunikationsverbindung von dem einen oder den mehreren Endgeräten der empfangenden Mitglieder zu dem Datenspiegel aufgebaut; und
e) es wird Information zwischen dem Endgerät des sendenden Mitglieds und dem einen oder den mehreren Endgeräten der empfangenden Mitglieder der Gemeinschaft über den Datenspiegel übertragen.

2. Verfahren nach Anspruch 1, **dadurch gekennzeichnet, dass** in Verbindung mit dem Schritt a) an jedes Mitglied der Gemeinschaft mindestens eines der nachfolgenden Stücke an Kennungsinformation angehängt wird:
a) Kennung oder Passwort,
b) IP-Adresse,
c) MSISDN-Zahl,
d) Zugangspunkt-Nummer.

3. Verfahren nach Anspruch 1 oder 2, **dadurch gekennzeichnet, dass** im Zusammenhang mit dem Schritt b):
das sendende Mitglied ein vorbestimmtes Stück der Kennungsinformation zum Aufbauen einer Verbindung zu dem Datenspiegel anfordert.

4. Verfahren nach Anspruch 1, **dadurch gekennzeichnet, dass** im Zusammenhang mit dem Schritt b):
ein oder mehrere empfangende Mitglieder definiert werden, zu denen man Information senden möchte.

5. Verfahren nach Anspruch 1, **dadurch gekennzeichnet, dass** im Schritt c):
ein oder mehrere Endgeräte empfangender Mitglieder der Gemeinschaft eine Verbindungsanforderung von dem Datenspiegel senden, wobei die Verbindungsanforderung verbindungsspezifische Information beinhaltet.

6. Verfahren nach Anspruch 5, **dadurch gekennzeichnet, dass** die verbindungsspezifische Information mindestens eines der folgenden Elemente enthält:
a) das die Verbindung anfordernde Mitglied,
b) Gegenstand der Verbindung,
c) Verbindungstyp.

7. Verfahren nach Anspruch 1 oder 5, **dadurch gekennzeichnet, dass** die Verbindungsanforderung in einer Kurznachricht des öffentlichen Mobilfunknetzwerks übertragen wird.

8. Verfahren nach Anspruch 1, **dadurch gekennzeichnet, dass** im Zusammenhang mit dem Schritt d)
zum Aufbau einer Verbindung zu dem Datenspiegel von einem empfangenden Mitglied ein vorab definiertes Stück Kennungsinformation angefordert wird.

9. Verfahren nach Anspruch 1, **dadurch gekennzeichnet, dass** der Verbindungstyp im Schritt b) oder im Schritt d) paketvermittelt oder leitungsvermittelt ist.

10. Verfahren nach Anspruch 1, **dadurch gekennzeichnet, dass** ein Mitglied zu einer Gemeinschaft oder zu mehreren Gemeinschaften gehören kann.

11. Verfahren nach Anspruch 1, **dadurch gekennzeichnet, dass** die durch den Datenspiegel geleitete Information einer Virusprüfung unterzogen wird.

12. Verfahren nach Anspruch 1, **dadurch gekennzeichnet, dass** die über den Datenspiegel zu übertragende Information gefiltert wird, bevor die Information an ein Endgerät eines Mitglieds der Gemeinschaft übertragen wird.

13. Verfahren nach Anspruch 1, **dadurch gekennzeichnet, dass** die durch den Datenspiegel gelangende Information komprimiert wird, bevor die Information an ein Endgerät eines Mitglieds der Gemeinschaft gesendet wird.

14. Verfahren nach Anspruch 1, **dadurch gekennzeichnet, dass** ein mitgliederspezifisches Profil für das Mitglied generiert wird, wobei das Profil Information zumindest bezüglich folgender Elemente beinhaltet:
a) zulässige Verbindungstypen,
b) zulässige Protokolle,
c) zulässige Anwendungen,
d) Inhalts-Präferenzen,
e) Qualitätserfordernisse für die Verbindung.

15. System zum Aufbauen einer Datenverbindung zwischen einem Endgerät eines öffentlichen Mobilfunknetzwerks und einem anderen Endgerät des öffentlichen Mobilfunknetzwerks oder einem Endgerät oder einer anderen Komponente eines anderen Telekommunikationsnetzwerks, umfassend:
ein öffentliches Mobilfunknetzwerk (PLMN);
ein Telekommunikationsnetzwerk (CN);
ein Endgerät (SEND) eines sendenden Mitglieds in Verbindung mit dem öffentlichen Mobilfunknetzwerk (PLMN) oder dem Tetekommunikationsnetzwerk (CN);
ein oder mehrere Endgeräte (MS1, MS2, ...MSn) der empfangenden Mitglieder in Verbindung mit dem öffentlichen Mobilfunknetzwerk (PLMN) oder dem Telekommunikationsnetzwerk (CN);
**dadurch gekennzeichnet, dass**
das System einen Datenspiegel (DM) aufweist zum Registrieren einer Gemeinschaft, die aus mehreren Teilnehmern besteht, die ein Endgerät benutzen, wobei der Datenspiegel (DM) an das öffentliche Mobilfunknetzwerk (PLMN) und/oder das Telekommunikationsnetzwerk (CN) angeschlossen ist;
das Endgerät (SEND) eines sendenden Mitglieds und die Endgeräte (MS1, MS2, ...MSn) von empfangenden Mitgliedern weisen Verbindungsmittel (CM) zum Aufbauen einer Verbindung zu dem Datenspiegel (DM) auf;
der Datenspiegel (DM) enthält Verbindungsmittel (MM) zum Senden einer Verbindungsanforderung an ein oder an mehrere Endgeräte der empfangenden Mitglieder der Gemeinschaft;
der Datenspiegel (DM) enthält eine Informationseinrichtung (IM) zum Übertragen von Information zwischen dem Endgerät (SEND) des sendenden Mitglieds und einem oder mehreren Endgeräten der empfangenden Mitglieder der Gemeinschaft.

16. System nach Anspruch 15, **dadurch gekennzeichnet, dass** der Datenspiegel (DM) eine Virusprüfeinrichtung (VDM) zum Überprüfen der durch den Datenspiegel (DM) gehenden Information aufweist.

17. System nach Anspruch 15 oder 16, **dadurch gekennzeichnet, dass** der Datenspiegel (DM) ein Filter (FIL) zum Filtern der durch den Datenspiegel (DM) gehenden Information aufweist.

18. System nach einem der vorhergehenden Ansprüche 15 oder 16 oder 17, **dadurch gekennzeichnet, dass** der Datenspiegel (DM) einen Kompressor (CMP) zum Komprimieren der durch den Datenspiegel (DM) gehenden Information aufweist.

19. System nach einem der Ansprüche 15, 16, 17, oder 18, **dadurch gekennzeichnet, dass** der Datenspiegel (DM) eine Datenbank (DB) enthält, oder dass es eine Verbindung von dem Datenspiegel (DM) zu der Datenbank (DB) gibt, in der Information über die Mitglieder der Gemeinschaft gespeichert wird.

20. System nach einem der Ansprüche 15, 16, 17, 18 oder 19, **dadurch gekennzeichnet, dass** das öffentliche Mobilfunknetzwerk (PLMN) ein GSM-Netzwerk ist.

21. System nach einem der vorhergehenden Ansprüche 17, 18 oder 19, **dadurch gekennzeichnet, dass** das öffentliche Mobilfunknetzwerk (PLMN) ein GPRS-Netzwerk ist.

22. System nach einem der Ansprüche 15, 16, 17, 18 oder 19, **dadurch gekennzeichnet, dass** das öffentliche Mobilfunknetzwerk (PLMN) ein UMTS-Netzwerk ist.

23. System nach einem der vorhergehenden Ansprüche 15, 16, 17, 18, 19, 20, 21 oder 22, **dadurch gekennzeichnet, dass** das Telekommunikationsnetzwerk (CN) das Internet ist.

## Revendications

1. Procédé pour établir une connexion de données entre un dispositif terminal d'un réseau mobile terrestre public et un autre dispositif terminal du réseau mobile terrestre public ou un dispositif terminal ou un autre composant d'un autre réseau de télécommunication,
**caractérisé en ce que** le procédé comprend en outre les étapes consistant à :
a) enregistrer dans un serveur de données dupliquées connecté au réseau mobile terrestre public et/ou au réseau de télécommunication, une communauté constituée d'une pluralité de membres, chacun utilisant un dispositif terminal, chaque dispositif terminal étant connecté au réseau mobile terrestre public ou au réseau de télécommunication ;
b) établir une connexion depuis un dispositif terminal d'un membre émetteur avec le serveur de données dupliquées ;
c) envoyer une demande de connexion à un ou plusieurs dispositifs terminaux des membres récepteurs de la communauté ; et si le membre récepteur souhaite établir une connexion, alors
d) établir une connexion de télécommunication depuis le ou les dispositifs terminaux des membres récepteurs avec le serveur de données dupliquées ; et
e) transmettre les informations entre le dispositif terminal du membre émetteur et le ou les dispositifs terminaux des membres récepteurs de la communauté via le serveur de données dupliquées.

2. Procédé selon la revendication 1, **caractérisé en ce que**, en association avec l'étape a), au moins une des informations d'identification suivantes est attachée à chaque membre de la communauté :
a) un identifiant ou mot de passe,
b) une adresse IP,
c) un numéro MSISDN de station mobile,
d) un numéro de port.

3. Procédé selon la revendication 1 ou 2, **caractérisé par**, en association avec l'étape b) :
demander au membre émetteur une information d'identification prédéfinie pour établir une connexion avec le serveur de données dupliquées.

4. Procédé selon la revendication 1, **caractérisé par**, en association avec l'étape b) :
définir un ou plusieurs membres récepteurs auxquels on souhaite envoyer des informations.

5. Procédé selon la revendication 1, **caractérisé par**, à l'étape c) :
envoyer à un ou plusieurs dispositifs terminaux des membres récepteurs de la communauté une demande de connexion provenant du serveur de données dupliquées, la demande de connexion contenant des informations spécifiques à la connexion.

6. Procédé selon la revendication 5, **caractérisé en ce que** les informations spécifiques à la connexion contiennent au moins un des éléments suivants :
a) le membre demandant la connexion,
b) le sujet de la connexion,
c) le type de connexion.

7. Procédé selon la revendication 1 ou 5, **caractérisé en ce que** la demande de connexion est transmise dans un message court du réseau mobile terrestre public.

8. Procédé selon la revendication 1, **caractérisé par**, en association avec l'étape d) :
demander à un membre récepteur une information d'identification prédéfinie pour établir une connexion avec le serveur de données dupliquées.

9. Procédé selon la revendication 1, **caractérisé en ce que** le type de connexion de l'étape b) ou de l'étape d) utilise soit la commutation de paquets, soit la commutation de circuits.

10. Procédé selon la revendication 1, **caractérisé en ce qu'**un membre peut appartenir à une ou plusieurs communautés.

11. Procédé selon la revendication 1, **caractérisé en ce que** les informations transmises via le serveur de données dupliquées sont soumises à une recherche de virus.

12. Procédé selon la revendication 1, **caractérisé en ce que** les informations à transmettre via le serveur de données dupliquées sont filtrées avant de transmettre les informations à un dispositif terminal d'un membre de la communauté.

13. Procédé selon la revendication 1, **caractérisé en ce que** les informations traversant le serveur de données dupliquées sont compressées avant d'envoyer les informations précédemment mentionnées à un dispositif terminal d'un membre de la communauté.

14. Procédé selon la revendication 1, **caractérisé en ce qu'**un profil spécifique au membre est généré pour le membre, le profil contenant des informations sur au moins un des éléments suivants :
a) les types de connexions autorisées,
b) les protocoles autorisés,
c) les applications autorisées,
d) les préférences sur le contenu,
e) la qualité de connexion requise.

15. Système pour établir une connexion de données entre un dispositif terminal d'un réseau mobile terrestre public et un autre dispositif terminal du réseau mobile terrestre public ou un dispositif terminal ou un autre composant d'un autre réseau de télécommunication, le système comprenant :
un réseau mobile terrestre public (PLMN) ;
un réseau de télécommunication (CN) ; ,
un dispositif terminal (SEND) d'un membre émetteur connecté au réseau mobile terrestre public (PLMN) ou au réseau de télécommunication (CN) ;
un ou plusieurs dispositifs terminaux (MS1, MS2, ..., MSn) de membres récepteurs connectés au réseau mobile terrestre public (PLMN) ou au réseau de télécommunication (CN) ;
**caractérisé en ce que** :
le système comprend un serveur de données dupliquées (DM) pour enregistrer une communauté constituée d'une pluralité de membres utilisant un dispositif terminal, dans lequel le serveur de données dupliquées (DM) est connecté (DM) au réseau mobile terrestre public (PLMN) et/ou au réseau de télécommunication (CN) ;
le dispositif terminal (SEND) d'un membre émetteur et les dispositifs terminaux (MS1, MS2, ..., MSn) des membres récepteurs comprennent des moyens de connexion (CM) pour établir une connexion avec le serveur de données dupliquées (DM) ;
le serveur de données dupliquées (DM) comprend des moyens de connexion (MM) pour envoyer une demande de connexion à un ou plusieurs dispositifs terminaux des membres récepteurs de la communauté ; et
le serveur de données dupliquées (DM) comprend des moyens d'informations (IM) pour transmettre les informations entre le dispositif terminal (SEND) du membre émetteur et le ou les dispositifs terminaux des membres récepteurs de la communauté.

16. Système selon la revendication 15, **caractérisé en ce que** le serveur de données dupliquées (DM) comprend un moyen de recherche de virus (VDM) pour vérifier les informations traversant le serveur de données dupliquées (DM).

17. Système selon la revendication 15 ou 16, **caractérisé en ce que** le serveur de données dupliquées (DM) comprend un filtre (FIL) pour filtrer les informations traversant le serveur de données dupliquées (DM).

18. Système selon l'une quelconque des revendications 15, 16 ou 17 précédentes, **caractérisé en ce que** le serveur de données dupliquées (DM) comprend un compresseur (CMP) pour compresser les informations traversant le serveur de données dupliquées (DM).

19. Système selon l'une quelconque des revendications 15, 16, 17 ou 18 précédentes, **caractérisé en ce que** le serveur de données dupliquées (DM) comprend une base de données (DB) ou il existe une connexion entre le serveur de données dupliquées (DM) et la base de données (DB) dans laquelle les informations relatives aux membres de la communauté sont enregistrées.

20. Système selon l'une quelconque des revendications 15, 16, 17, 18 ou 19 précédentes, **caractérisé en ce que** le réseau mobile terrestre public (PLMN) est un réseau GSM.

21. Système selon l'une quelconque des revendications 17, 18 ou 19 précédentes, **caractérisé en ce que** le réseau mobile terrestre public (PLMN) est un réseau GPRS.

22. Système selon l'une quelconque des revendications 15, 16, 17, 18 ou 19 précédentes, **caractérisé en ce que** le réseau mobile terrestre public (PLMN) est un réseau UMTS.

23. Système selon l'une quelconque des revendications 15, 16, 17, 18, 19, 20, 21 ou 22 précédentes, **caractérisé en ce que** le réseau de télécommunication (CN) est Internet.
